# EUROPÄISCHE PATENTSCHRIFT

(11) **EP 3 319 838 B1**
(45) Veröffentlichungstag und Bekanntmachung des Hinweises auf die Patenterteilung: **31.03.2021**
(21) Anmeldenummer: 16735876.1
(22) Anmeldetag: 06.07.2016
(51) Int. Cl.: B60R 9/04

(54) **DACHRELING FÜR EIN KRAFTFAHRZEUG, KRAFTFAHRZEUG MIT DACHRELING SOWIE VERFAHREN ZUR HERSTELLUNG EINER DACHRELING**
ROOF RAIL FOR A MOTOR VEHICLE, MOTOR VEHICLE HAVING A ROOF RAIL, AND METHOD FOR PRODUCING A ROOF RAIL
GALERIE DE TOIT POUR VÉHICULE AUTOMOBILE, VÉHICULE AUTOMOBILE COMPORTANT UNE GALERIE DE TOIT ET PROCÉDÉ DE PRODUCTION D'UNE TELLE GALERIE DE TOIT

(30) Priorität: 07.07.2015 DE 102015212684
(43) Veröffentlichungstag der Anmeldung: 16.05.2018
(73) Patentinhaber: FYSAM Auto Decorative GmbH, 89555 Steinheim am Albuch (DE)
(72) Erfinder: BINDER, Hans, 89558 Böhmenkirch (DE); BINDER, Ottmar, 89558 Böhmenkirch (DE); SIRRENBERG, Stefan, 42279 Wuppertal (DE); VETTER, Rolf, 72102 Birenbach (DE)
(74) Vertreter: Dietz, Christopher Friedrich
(86) Internationale Anmeldenummer: PCT/EP2016/066020
(87) Internationale Veröffentlichungsnummer: WO 2017/005808

(56) Entgegenhaltungen:
- EP-A2- 1 199 221
- DE-A1-102012 000 827
- DE-U1-202008 013 478

## Beschreibung

Die Erfindung betrifft eine Dachreling für ein Kraftfahrzeug, mit mindestens einem sich entlang des Dachs des Kraftfahrzeugs erstreckenden längsgeteilten Galeriestab, der sich aus mehreren, miteinander fest verbundenen Einzelstäben zusammensetzt.

Eine Dachreling der eingangs genannten Art ist bekannt. Die bekannte Dachreling weist vorzugsweise zwei Galeriestäbe auf, die - parallel zueinander verlaufend - auf einem Dach eines Kraftfahrzeugs befestigt sind. Die Dachreling bietet die Möglichkeit, Lasten auf dem Dach des Fahrzeugs zu befestigen. Zumeist sind hierfür Zusatzeinrichtungen erforderlich, die an der Dachreling befestigt werden, beispielsweise Fahrradträger, Skikofferaufsatz und so weiter. Die bekannte Dachreling ist in Bezug auf ihre optische Erscheinung, ihr Design und hinsichtlich ihrer technischen Eigenschaften nicht flexibel.

Aus dem Stand der Technik ist beispielsweise die Druckschrift DE 10 2012 000 827 A1 bekannt. Diese betrifft eine Dachreling für ein Kraftfahrzeug, mit mindestens einem Galeriestab und mit mindestens einem an dem Galeriestab befestigten Stützelement zur Überbrückung eines zwischen dem Galeriestab und dem Dach des Kraftfahrzeugs ausgebildeten Abstands und zur Festlegung der Dachreling am Dach des Kraftfahrzeugs, sowie mit mindestens einer Abdeckung für das Stützelement, wobei Galeriestab, Stützelement und Abdeckung als separate Bauteile ausgebildet sind. Es ist vorgesehen, dass die Abdeckung mindestens einen Befestigungsbereich aufweist, der zur Befestigung der Abdeckung in einem zwischen Galeriestab und Stützelement ausgebildeten Spalt gehalten ist.

Weiterhin offenbart die Druckschrift DE 20 2008 013 478 U1 eine ein- oder mehrteilige Dachreling für ein Kraftfahrzeug mit einem Tragsystem mit mindestens zwei Dachrelingfüßen und einem Dachrelingsteg aus einem duroplastischen oder thermoplastischen Kunststoff. Dabei ist vorgesehen, dass die Dachreling eine das Tragsystem stabilisierende und aussteifende Rippenstruktur aufweist.

Der Erfindung liegt die Aufgabe zugrunde, eine Dachreling für ein Kraftfahrzeug anzugeben, die in einfacher Weise vielfältigen Anforderungen anpassbar ist.

Diese Aufgabe wird erfindungsgemäß bei einer Dachreling der eingangs genannten Art dadurch gelöst, dass die Einzelstäbe jeweils Ober- und Unterseiten aufweisen, wobei auf der Oberseite von mindestens einem der Einzelstäbe die Unterseite eines angrenzenden Einzelstabs aufgesetzt angeordnet ist. Demzufolge lassen sich die optische Erscheinung, das Design und/oder die technischen Eigenschaften der Dachreling sehr leicht und flexibel variieren, indem entsprechende Einzelstäbe miteinander kombiniert und zum Galeriestab zusammengesetzt werden. Unter einem "längsgeteilten Galeriestab" ist ein Stab zu verstehen, der eine entlang seiner Längserstreckung verlaufende Längsfuge beziehungsweise ebenso verlaufende Längsfugen aufweist. Die Längsfuge beziehungsweise die Längsfugen sind zwischen den Einzelstäben ausgebildet. Grundsätzlich ist vorgesehen, dass diese Fugen nicht oder nicht unmittelbar sichtbar sind, sondern dass die Einzelstäbe spaltfrei aneinander liegen. Zusätzlich oder alternativ kann jedoch auch vorgesehen sein, dass beispielsweise bereichsweise eine Längsfuge zwischen den Einzelstäben vorgesehen ist, die einen sichtbaren Spalt bildet. Durch Wahl entsprechender Einzelstäbe im Hinblick auf deren optische, designtechnische und technische Eigenschaften, wird der daraus gebildete Galeriestab dementsprechende Eigenschaften besitzen. So ist es beispielsweise möglich Einzelstäbe unterschiedlichem Materials und/oder unterschiedlichen optischen Aussehens miteinander zum Galeriestab zu kombinieren. Demzufolge ist aufgrund der Erfindung eine Dachreling geschaffen, deren Galeriestab oder deren Galeriestäbe vom Hersteller einfach uns vielseitig den jeweiligen Wünschen/Anforderungen angepasst werden kann/können. Da die Einzelstäbe miteinander fest verbunden, insbesondere mittels Schrauben untereinander verschraubt sind, ergibt sich ein fester Zusammenhalt, also ein Galeriestab mit sehr guten Belastungseigenschaften, die sich je nach Wahl der gewählten Einzelstäbe definieren. So ist es beispielsweise möglich Einzelstäbe unterschiedlichen Materials und/oder unterschiedlicher Querschnittskontur, letzteres in Bezug auf die jeweilige Außenkontur und/oder gegebenenfalls auch Innenkontur (bei einem Hohlprofil, mehreren Hohlprofilen, einem Vollprofil, mehreren Vollprofilen und/oder der Kombination von mindestens einem Hohlprofil und mindestens einem Vollprofil) zu kombinieren. Auch im Hinblick auf die optischen Eigenschaften ist der sich aus Einzelstäben zusammensetzende längsgeteilte Galeriestab sehr einfach in gewünschter Weise zusammenstellbar. So lassen sich unterschiedliche Farben, unterschiedliche Oberflächen, unterschiedliche Strukturen, unterschiedlich eloxierte Flächen und/oder unterschiedliche Beschichtungen und natürlich auch beliebige Kombinationen dieser Merkmale durch eine entsprechende Zusammenstellung von Einzelstäben schaffen.

Gemäß der Erfindung ist vorgesehen, dass die Einzelstäbe jeweils Ober- und Unterseiten aufweisen, wobei auf die Oberseite von mindestens einem der Einzelstäbe die Unterseite eines angrenzenden Einzelstabs aufgesetzt angeordnet ist. Die genannten Einzelstäbe verlaufen dabei vorzugsweise parallel zueinander (geringe Abweichungen hiervon sollen auch unter dem "Parallelverlauf" subsummiert werden).

Nach einer Weiterbildung der Erfindung ist vorgesehen, dass die Oberseite und/oder die Unterseite von zumindest einigen der aneinandergrenzenden Einzelstäbe ineinandergreifende Profilierungen aufweisen. Hierdurch werden die Einzelstäbe zueinander verrutschsicher ausgerichtet, ihre Befestigung aneinander wird dadurch unterstützt und es wird ferner die Belastbarkeit erhöht. Die ineinandergreifenden Profilierungen verbessern insbesondere die Aufnahme von Querkräften, die auf den Galeriestab wirken, also Kräften, die quer zur Längserstreckung des Galeriestabs wirken.

Nach einer Weiterbildung der Erfindung ist vorgesehen, dass die eine der Profilierungen mindestens einen Vorsprung, insbesondere mindestens eine sich über die Länge des Einzelstabs erstreckende, den Vorsprung bildende Rippe, aufweist und dass die andere der Profilierungen mindestens eine den Vorsprung aufnehmende Vertiefung, insbesondere eine sich über die Länge des Einzelstabs erstreckende, die Vertiefung bildende Nut, aufweist.

Nach einer Weiterbildung der Erfindung ist vorgesehen, dass der längsgeteilte Galeriestab ein zweigeteilter Galeriestab mit einem ein Oberteil bildenden Einzelstab und einem ein Unterteil bildenden Einzelstab ist. Der Galeriestab ist demzufolge aus zwei Einzelstäben zusammengesetzt. Die Einzelstäbe können gleich ausgebildet sein, vorzugsweise sind sie jedoch unterschiedlich ausgebildet, insbesondere weisen sie unterschiedliche Abmessungen, Querschnittskonturen, Materialien und/oder Formgebungen und so weiter auf.

Eine Weiterbildung der Erfindung sieht vor, dass die Einzelstäbe mittels insbesondere mehrerer, insbesondere über ihre Länge verteilt angeordneter Verbindungsstellen miteinander verbunden sind. Hierdurch wird ein fester Gesamtzusammenhalt gewährleistet. Auch ist dadurch eine hohe Biegesteifigkeit hierdurch erzielt.

Die Verbindungsstellen können - nach entsprechenden Ausführungsformen der Erfindung - als Schraubverbindungsstellen, Nietverbindungsstellen und/oder Nutsteinbefestigungsstellen ausgebildet sein. Hinsichtlich der Schraubverbindungsstellen kommen insbesondere Gewindeschrauben zum Einsatz, die mindestens einen Einzelstab durchgreifen und in Gewindelöcher mindestens eines anderen Einzelstabs eingeschraubt werden. Denkbar sind jedoch auch mit Muttern versehene Schrauben, wobei die Schäfte der Schrauben Befestigungslöcher der beteiligten Einzelstäbe durchgreifen. In entsprechender Weise können Niete zum Einsatz kommen, mit denen die Einzelstäbe miteinander verbunden sind. Bei den erwähnten Nutsteinbefestigungsstellen handelt es sich um Befestigungseinrichtungen, die jeweils einen Nutstein aufweisen, der in eine entsprechende Aufnahme eines Einzelstabs eingeschoben wird und einen Befestigungsbolzen aufweist oder die Befestigung eines Befestigungsbolzens gestattet, wobei mit dem Befestigungsbolzen mindestens ein angrenzender Einzelstab gehalten wird. Beispielsweise kann ein Nutstein ein Gewindeloch aufweisen, in den eine den Befestigungsbolzen bildende Gewindeschraube eingeschraubt wird, die ein Befestigungsloch mindestens eines angrenzenden Einzelstabs durchgreift oder der Nutstein weist eine daran unverdrehbar befestigte Gewindestange auf, die ein Befestigungsloch des mindestens einen angrenzenden Einzelstabs durchsetzt und auf die eine Befestigungsmutter aufgeschraubt wird, um die mindestens zwei Einzelstäbe miteinander fest miteinander zu verspannen.

Nach einer Weiterbildung der Erfindung ist vorgesehen, dass die Einzelstäbe gleichgroße und/oder unterschiedlich große Längen aufweisen. Vorzugsweise ist der Galeriestab an seinen beiden Endbereichen derart gebogen ausgeführt, dass sich seine über das Dach des Kraftfahrzeugs hinauserstreckende Höhe verkleinert. Die Endbereiche laufen demzufolge aufgrund der Biegungen mit kleiner werdenden Höhen aus. Dies hat zur Folge, dass der längsgeteilte, aus Einzelstäben zusammengesetzte Galeriestab vorzugsweise Einzelstäbe mit unterschiedlich großen Längen aufweist. Betrachtet man zum Beispiel einen Galeriestab, der sich aus zwei miteinander verbundenen Einzelstäben zusammensetzt, so ist die Länge des obenliegenden Einzelstabs größer als die Länge des darunterliegenden, damit der obenliegende Einzelstab den darunterliegenden Einzelstab in seinen Endbereichen überdeckt.

Nach einer Weiterbildung ist vorgesehen, dass das Oberteil länger ist als das Unterteil beziehungsweise das mindestens ein oberer Einzelstab länger ist als mindestens ein unterer Einzelstab. Hierauf wurde bereits vorstehend eingegangen.

Die erfindungsgemäße Dachreling ist vorzugsweise derart gestaltet, dass sie fußstrebenfrei ist, das heißt, der mindestens eine Galeriestab verläuft nicht mit Abstand zum Dach des Kraftfahrzeugs, wobei dieser Abstand durch Fußstreben geschaffen ist, sondern - beim Blick auf das Fahrzeug von seiner Seite her - überragt der Galeriestab das Dach des Fahrzeugs im Wesentlichen mit der Höhe/Dicke des Galeriestabs. Die Unterseite des Galeriestabs folgt der Kontur des Dachs, wobei insbesondere keine oder insbesondere keine nennenswerte Spaltbildung zwischen der Dachkontur und der Unterseite des Galeriestabs vorliegt. Alternativ kann die Erfindung jedoch auch bei einer Dachreling realisiert sein, bei der der mindestens eine Galeriestab mit Abstand zum Dach des Kraftfahrzeugs verläuft. Hierzu ist vorzugsweise mindestens eine Fußstrebe vorhanden, die den Abstand des Galeriestabs zum Dach des Kraftfahrzeugs schafft. Gleichwohl kann der Galeriestab erfindungsgemäß, also längsgeteilt ausgebildet sein und sich aus mehreren, miteinander verbundenen Einzelstäben zusammensetzen.

Insbesondere ist vorgesehen, dass die Einzelstäbe - im Querschnitt gesehen - unterschiedliche Breiten aufweisen. So ist es vorzugsweise möglich, dass der zu oberstliegende Galeriestab, der also am weitesten vom Dach des Kraftfahrzeugs entfernt ist, eine größere Breite aufweist, als mindestens ein darunterliegender Galeriestab. Hierdurch wird der optische Eindruck geschaffen, dass der untere Einzelstab als Tragstruktur für den oberen Einzelstab dient. Gleichwohl ist der untere Einzelstab nicht als reines Befestigungselement für den oberen Einzelstab anzusehen, sondern der untere Einzelstab bildet zusammen mit dem oberen Einzelstab den längsgeteilten Galeriestab, der insgesamt dem aus dem Stand der Technik bekannten Galeriestab entspricht, der nicht längsgeteilt, sondern einstückig ist.

Vorzugsweise ist vorgesehen, dass - im Querschnitt gesehen - die Breite des Oberteils größer ist als die an seiner Oberseite vorliegende Breite des Unterteils. Hierauf wurde vorstehend bereits eingegangen.

Nach einer Weiterbildung der Erfindung ist vorgesehen, dass an der Unterseite von mindestens einem der Galeriestäbe mindestens eine Tasche ausgebildet ist, in die ein Endbereich eines angrenzenden Einzelstabs eingreift. Vorzugsweise ist an der Unterseite des erwähnten Einzelstabs jeweils in den beiden Endbereichen von diesem jeweils eine Tasche ausgebildet. Der angrenzende, darunter angeordnete Einzelstab greift mit seinen Enden in die jeweilige Tasche ein und wird auf diese Art und Weise positioniert. Hierdurch ist eine Relativverschiebung der beiden Einzelstäbe in Längserstreckungsrichtung des Galeriestabs nicht möglich. Die Tasche/Taschen dienen demzufolge einer reproduzierbaren Zuordnung der Einzelstäbe zueinander und verhindern eine Relativverlagerung zueinander.

Bevorzugt sind die Einzelstäbe als Hohlprofile ausgebildet. Denkbar ist selbstverständlich auch, dass Vollprofile verwendet werden oder dass sich der Galeriestab aus mindestens einem Einzelstab zusammensetzt, der als Hohlprofil ausgebildet ist und mindestens einem Einzelstab, der als Vollprofil ausgebildet ist.

Bevorzugt ist vorgesehen, dass die Einzelstäbe extrudierte Einzelstäbe sind. Letzteres unabhängig davon, ob sie als Hohlprofile oder als Vollprofile gefertigt werden. Das Extrudieren erfolgt in Richtung der Längserstreckung des jeweiligen Einzelstabs und lässt eine sehr einfache und kostengünstige Fertigung zu.

Insbesondere ist vorgesehen, dass die Einzelstäbe aus Aluminium oder einer Aluminiumlegierung bestehen, insbesondere Aluminiumprofile oder Aluminiumlegierungsprofile, bevorzugt extrudierte Aluminiumprofile oder extrudierte Aluminiumlegierungsprofile sind.

Eine Weiterbildung der Erfindung sieht vor, dass an der Unterseite des zu unterstliegenden Einzelstabs mindestens ein Adapter zur Befestigung am Dach, insbesondere an der Karosserie, des Kraftfahrzeugs angeordnet, insbesondere befestigt, vorzugsweise schraubbefestigt, nietbefestigt und/oder nutsteinbefestigt ist. Dieser Adapter ist zum einen mit dem mindestens einen Einzelstab und zum anderen mit dem Dach, insbesondere der Karosserie, verbunden. Bevorzugt wird der Adapter in einem sogenannten Dachkanal des Kraftfahrzeugs angeordnet. Insbesondere sind mehrere Adapter pro Galeriestab vorgesehen, die über die Länge des Galeriestabs verteilt angeordnet sind.

Nach einer Weiterbildung der Erfindung ist vorgesehen, dass die Einzelstäbe aus unterschiedlichem Material bestehen. Damit ist auch gemeint, dass für die Einzelstäbe beispielsweise unterschiedliche Aluminiumlegierungen zum Einsatz kommen können. Natürlich können auch gänzlich unterschiedliche Materialien für die Einzelstäbe zum Einsatz gelangen.

Nach einer Weiterbildung der Erfindung ist vorgesehen, dass mindestens einer der Einzelstäbe aus Kunststoff besteht, insbesondere ein Kunststoffprofil ist, vorzugsweise ein extrudiertes Kunststoffprofil oder ein Kunststoffformteil. Das Kunststoffprofil wird vorzugsweise durch Extrudieren hergestellt oder es wird als Kunststoffformteil erzeugt, also in einer Form hergestellt. Insbesondere ist vorgesehen, dass mindestens ein unterer Einzelstab, insbesondere das Unterteil, aus Kunststoff besteht und dass mindestens ein oberer Einzelstab, insbesondere das Oberteil, aus Aluminium oder einer Aluminiumlegierung besteht, wobei dieser untere Einzelstab und dieser obere Einzelstab optional mit weiteren Einzelstäben den Galeriestab bilden.

Bevorzugt ist vorgesehen, dass die Einzelstäbe insbesondere an ihren Sichtflächen unterschiedliche Farben, unterschiedliche Oberflächenstrukturen und/oder unterschiedliche Beschichtungen aufweisen. Damit wird der optische Eindruck eines derartigen Galeriestabs stark geprägt. Die erwähnten Maßnahmen sind für die optische Wirkung - wie erwähnt - insbesondere an den Sichtflächen der Einzelstäbe vorgesehen. Zusätzlich oder alternativ können natürlich auch die Einzelstäbe eines Profilstabs insgesamt, also an allen ihren Flächen, unterschiedliche Farben, unterschiedliche Oberflächenstrukturen und/oder unterschiedliche Beschichtungen aufweisen.

Bei dem erwähnten, zweiteiligen Galeriestab mit einem Unterteil und einem Oberteil ist die Anordnung derart getroffen, dass das Unterteil das Oberteil trägt. Dabei ist insbesondere vorgesehen, dass das Unterteil am Dach, insbesondere der Karosserie des Kraftfahrzeugs, befestigt ist und dass das Oberteil am Unterteil befestigt ist.

Eine Weiterbildung der Erfindung sieht vor, dass die Einzelstäbe jeweils einstückig ausgebildet sind.

Bei dem erfindungsgemäßen längsgeteilten Galeriestab, der sich aus mehreren, aneinander befestigten Einzelstäben zusammensetzt, verläuft die mindestens eine Teilungsfuge zwischen den einzelnen Einzelstäben in Längserstreckungsrichtung des Galeriestabs, und zwar ist die Teilungsfuge - in Gebrauchslage der Dachreling - horizontal oder im Wesentlichen horizontal ausgerichtet. Zusätzlich oder alternativ kann selbstverständlich auch vorgesehen sein, dass die Teilungsfuge eine andere Ausrichtung besitzt, beispielsweise vertikal oder im Wesentlichen vertikal verläuft. Im ersten Falle wird der obere Bereich des Galeriestabs von mindestens einem anderen Einzelstab gebildet als der untere Bereich des Galeriestabs. Im zweiten Falle wird die eine Seite des Galeriestabs von mindestens einem anderen Einzelstab gebildet als die andere Seite. Auch Teilungsfugen, die einen Neigungswinkel zur Horizontalen oder Vertikalen aufweisen, sind Gegenstand der Erfindung. Auch ist eine beliebige Kombination der verschiedenen erwähnten Teilungsfugen möglich. Bevorzugt ist die Anordnung derart getroffen, dass die mindestens eine Teilungsfuge nicht zu einem sichtbaren Abstand der aneinander befestigten Einzelstäbe führt, sondern geschlossen ist und/oder nicht sichtbar ist.

Vorzugsweise ist bei dem erfindungsgemäßen Relingstab vorgesehen, dass die Einzelstäbe - in Gebrauchslage der Dachreling - übereinander angeordnet sind. Mindestens sind zwei Einzelstäbe in dieser Anordnung vorgesehen. Alternativ ist es jedoch auch denkbar, dass die Einzelstäbe - in Gebrauchslage des Relingstabs - nicht übereinander, sondern nebeneinander angeordnet sind. Auch hier sind mindestens zwei Einzelstäbe für diese Nebeneinanderanordnung vorgesehen. Eine weitere Alternative besteht darin, Einzelstäbe sowohl übereinander als auch nebeneinander anzuordnen. Dies setzt mindestens die Anzahl von drei Einzelstäben voraus, wobei zwei Einzelstäbe nebeneinander liegen und ein Einzelstab darüber angeordnet ist, beispielsweise über dem einen der unteren oder über dem anderen der unteren oder über beiden der unteren Einzelstäbe. Die vorstehenden Ausführungen zeigen, dass diese erfindungsgemäße Zusammensetzung aus miteinander verbundenen Einzelstäben zur Bildung eines Galeriestabs in vielerlei Variationen, insbesondere bei einer noch größeren Anzahl von Einzelstäben, realisiert werden kann.

Die Erfindung betrifft ferner ein Kraftfahrzeug, das mit einer Dachreling versehen ist, so wie sie vorstehend in den verschiedenen Ausführungen beschrieben ist.

Ferner betrifft die Erfindung ein Verfahren zur Herstellung einer Dachreling für ein Kraftfahrzeug, insbesondere einer Dachreling so wie sie vorstehend in den verschiedenen Variationen beschrieben ist. Diese Dachreling ist mit mindestens einem sich entlang des Dachs des Fahrzeugs erstreckenden Galeriestabs versehen, wobei der Galeriestab aus mehreren Einzelstäben zur Bildung eines längsgeteilten Galeriestabs zusammengesetzt wird. Dabei ist vorgesehen, dass die Einzelstäbe jeweils Ober- und Unterseiten aufweisen, wobei auf der Oberseite von mindestens einem der Einzelstäbe die Unterseite eines angrenzenden Einzelstabs aufgesetzt angeordnet ist. "Längsgeteilt" bedeutet, dass die mindestens eine Teilungsfuge sich in Längserstreckungsrichtung des Galeriestabs erstreckt. Die mindestens eine Teilungsfuge kann horizontal, vertikal, oder schräg verlaufen. Es ist auch eine Kombination verschiedener Teilungsfugen denkbar. Hieraus resultiert eine entsprechende Anordnung von Einzelstäben pro Galeriestab.

Die Zeichnungen veranschaulichen die Erfindung anhand von Ausführungsbeispielen und zwar zeigt:
- Figur 1: eine perspektivische Ansicht eines Galeriestabs einer Dachreling für ein Kraftfahrzeug,
- Figur 2: eine perspektivische Unteransicht auf den Galeriestab der Figur 1,
- Figur 3: einen Querschnitt durch den Galeriestab der Figuren 1 in einem ersten Bereich,
- Figur 4: einen Querschnitt durch den Galeriestab der Figur 1 in einem zweiten Bereich,
- Figur 5: einen Abschnitt eines Endbereichs des Galeriestabs der Figur 2 in perspektivischer Unteransicht,
- Figur 6: einen Abschnitt eines anderen Endbereichs des Galeriestabs der Figur 2 in perspektivischer Unteransicht und
- Figur 7: ein Kraftfahrzeug versehen mit einer Dachreling, die zwei Galeriestäbe aufweist.

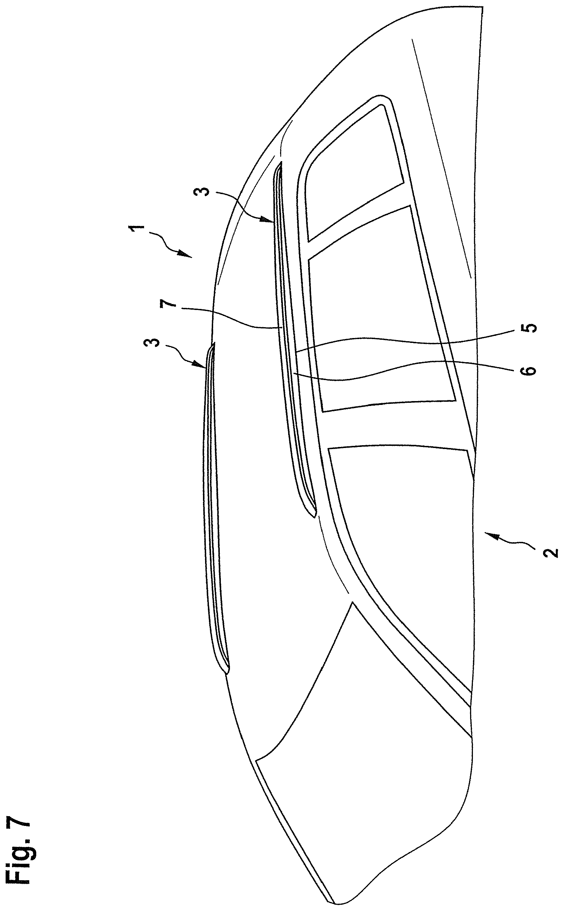

Die Figur 7 gibt einen Überblick bezüglich eines Ausführungsbeispiels der erfindungsgemäßen Dachreling 1 für ein Kraftfahrzeug 2. Die Dachreling 1 weist im dargestellten Ausführungsbeispiel zwei Galeriestäbe 3 auf, die - entlang der Längserstreckung des Kraftfahrzeugs 2 - auf dessen Dach 4 befestigt sind. Die Galeriestäbe 3 sind fußstrebenlos gestaltet, das heißt, sie überragen die angrenzende Oberfläche des Dachs 4 nur im Maß ihrer Höhe/Dicke, wobei die Anordnung vorzugsweise derart getroffen ist, dass zwischen der Oberfläche des Dachs 4 und der Unterseite des jeweiligen Galeriestabs 3 kein sichtbarer Freiraum besteht. Dies gilt auch dann, wenn der jeweilige Galeriestab 3 in einem jeweils zugehörigen Dachkanal des Kraftfahrzeugs 2 befestigt ist. Optional ist es möglich, dass zwischen der benachbarten Oberfläche des Dachs 4 und der Unterseite des jeweiligen Galeriestabs 3 eine optionale Unterlage 5 aus elastischem Material angeordnet ist. Diese Unterlage 5 wirkt lediglich dichtend, entfaltet jedoch keine Trageigenschaften. Ferner kann sie aus optischen Gründen erwünscht sein. Die Unterlage 5 kann beispielsweise aus Weichkunststoff wie Moosgummi, Neopren oder dergleichen bestehen.

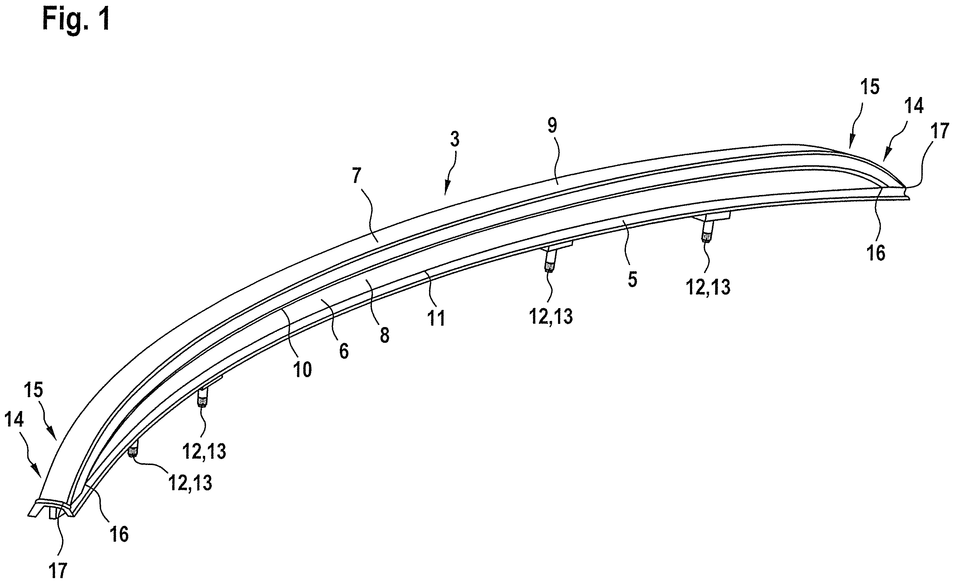

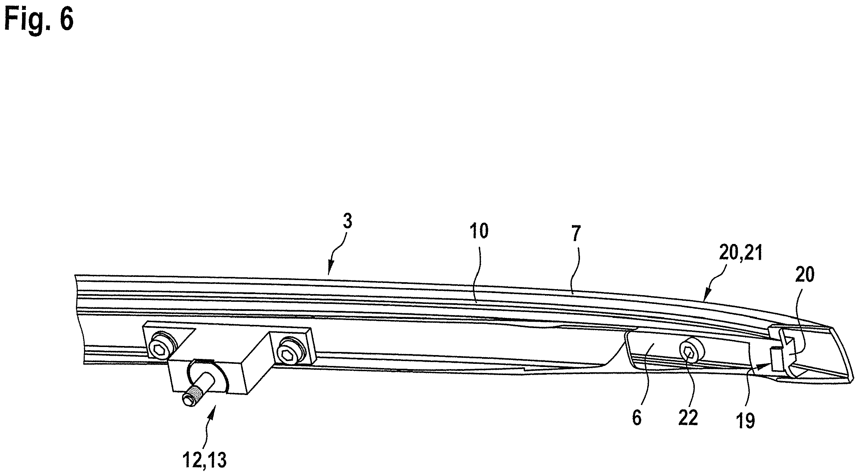

Die Figur 1 zeigt einen Galeriestab 3 der Dachreling 1. Der weitere Galeriestab 3 der Dachreling 1 (Figur 6) ist gleichartig ausgebildet. Der Galeriestab 3 der Figur 1 ist als längsgeteilter Galeriestab 3 ausgebildet. Dabei setzt er sich - im vorliegenden Ausführungsbeispiel - aus zwei, miteinander verbundenen Einzelstäben 6 und 7 zusammen. Die beiden Einzelstäbe 6 und 7 sind - in Gebrauchslage der Dachreling 1 - übereinander angeordnet. Bevorzugt bildet der untere Einzelstab 6 ein Unterteil 8 und der obere Einzelstab 7 ein Oberteil 9 des Galeriestabs 3. Die beiden Einzelstäbe 6 und 7 sind jeweils einstückig ausgebildet. Durch ihre Anordnung übereinander ist zwischen den Einzelstäben 6 und 7 eine Teilungsfuge 10 ausgebildet, die jedoch geschlossen ist, das heißt, sie ist nicht als Spalt erkennbar, sondern die beiden Einzelstäbe 6 und 7 liegen passgenau derart eng aufeinander, dass bei einer seitlichen Betrachtung des Galeriestabs 3 kein Spalt (durchscheinendes Licht) erkennbar ist. Letzteres kann auch durch geschickte Querschnittsprofilierung der beteiligten Einzelstäbe 6 und 7 erreicht sein. An der Unterseite 11 des Galeriestabs 3, nämlich an der Unterseite 11 des zu unterst liegenden Einzelstabs 6 ist die bereits erwähnte Unterlage 5 angeordnet, die jedoch optional ist. Ferner sind gemäß der Figur 1 an der Unterseite 11 des Galeriestabs 3 Befestigungselemente 12 befestigt, die vorzugsweise als sogenannte Adapter 13 ausgebildet sind. Die Adapter 13 dienen der Befestigung des Galeriestabs 3 am Dach 4, insbesondere an einer Karosserie, des Kraftfahrzeugs 2. Über die Länge des Galeriestabs 3 sind mehrere Befestigungselemente 12 verteilt angeordnet, um den Galeriestab 3 sicher auf dem Dach 4 des Kraftfahrzeugs 2 halten zu können. Die Anordnung ist derart getroffen, dass die Dicke/Höhe des Galeriestabs 3 zu seinen beiden Enden 14 hin abnimmt. Dies wird dadurch erzielt, dass die Endbereiche 15 des Galeriestabs 3 in Richtung auf das Dach 4 gebogen verlaufen. Dies hat zur Folge, dass dementsprechend auch die Höhe/Dicke der Einzelstäbe 6, 7 oder die Höhe/Dicke von zumindest einem der Einzelstäbe 6, 7 in den Endbereichen 15 zu den Enden 14 abnimmt. Im dargestellten Ausführungsbeispiel der Figur 1 weist der untere Einzelstab 6 eine kleinere Länge auf als der obere Einzelstab 7. Hierdurch wird erreicht, dass der Einzelstab 7 in den Endbereichen 15 die Enden 16 des Einzelstabs 6 überdeckt. In Längsrichtung des Galeriestabs 3 betrachtet besteht dementsprechend jeweils ein Abstand zwischen dem Ende 16 des Einzelstabs 6 und dem zugehörigen Ende 17 des Einzelstabs 7.

Die Teilungsfuge 10 verläuft in Längserstreckungsrichtung des Galeriestabs 3 und ist - in Gebrauchslage des Galeriestabs 3 - horizontal ausgerichtet. Aufgrund der erwähnten bogenförmigen Endbereiche 15 und gegebenenfalls der sonstigen leicht bogenförmig verlaufenden Gestalt des Galeriestabs 3 ist die Teilungsfuge 10 entsprechend bogenförmig verlaufend gestaltet. Diese Gestaltung ist auch unter dem Begriff "horizontal" zu subsumieren.

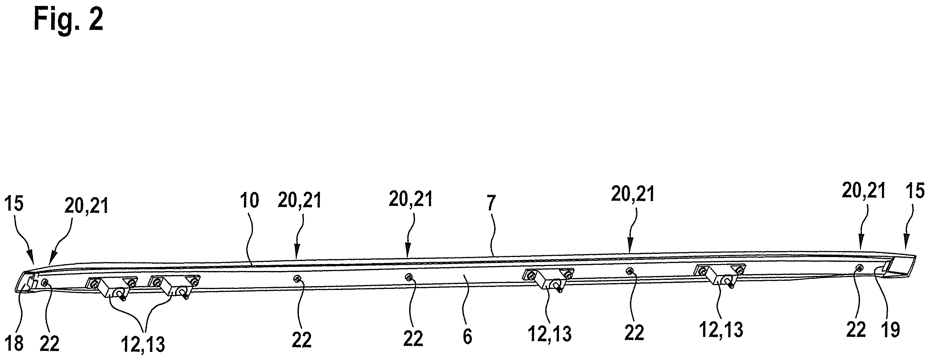

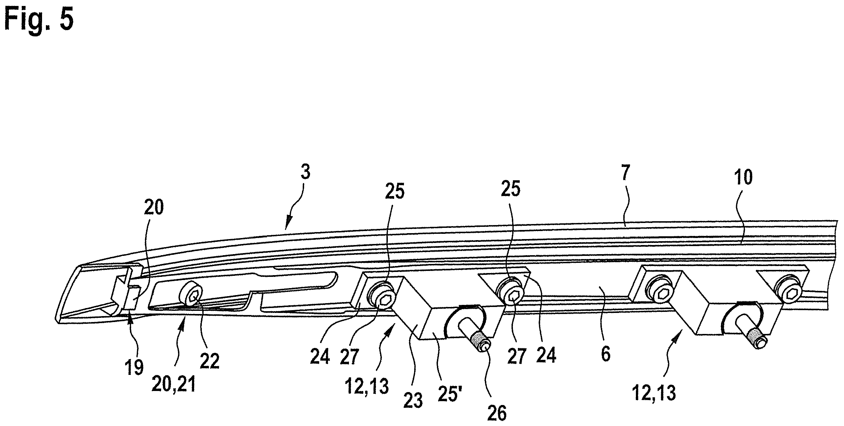

Gemäß Figur 2 ist in den Endbereichen 15 des Galeriestabs 3 an der Unterseite 18 des oberen Einzelstabs 7 jeweils eine Tasche 19 ausgebildet, in die das jeweilige Ende 16 des Einzelstabs 6 eingesteckt ist. Dieser Sachverhalt ist besonders deutlich aus den Figuren 5 und 6 ersichtlich. Die jeweilige Tasche 19 ist vorzugsweise durch einen winkelförmig verlaufenden Steg 20 gebildet. Der Steg 20 ist an dem Einzelstab 7 befestigt oder dort einstückig ausgebildet. Durch die Taschen 19 werden die beiden Einzelstäbe 6 und 7 in Längserstreckungsrichtung des Galeriestabs 3 relativ zueinander fixiert, sodass keine Verschiebungen auftreten können. Vorzugsweise erfolgt das Einschieben der Enden 16 des Einzelstabs 6 in die Taschen 19 quer zur Längserstreckungsrichtung des Galeriestabs 3 und/oder dadurch, dass der Einzelstab 6 beim Einsetzen leicht elastisch gebogen wird, um ihn für das Einsetzen kurzzeitig zu verkürzen.

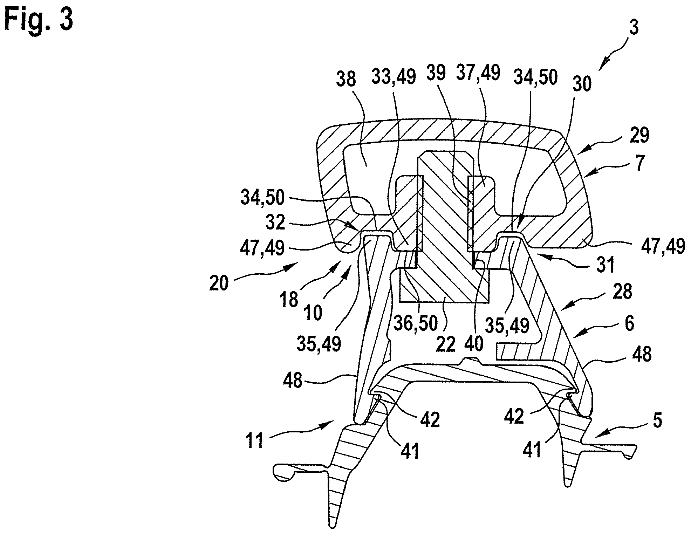

Gemäß der Figuren 2, 5 und 6 sind die beiden Einzelstäbe 6 und 7 miteinander fest verbunden. Dies erfolgt bei dem dargestellten Ausführungsbeispiel mittels mehrerer, über die Länge des Galeriestabs 3 verteilt angeordneter Verbindungsstellen 20, die im vorliegenden Falle als Schraubverbindungsstellen 21 ausgebildet sind. Jede Schraubverbindungsstelle 21 weist eine Gewindeschraube 22 auf, die eine Durchgangsöffnung 40 des Einzelstabs 6 durchgreift und in eine Gewindebohrung 39 des Einzelstabs 7 eingeschraubt ist (Figur 3).

In den Figuren 2, 4, 5 und 6 ist der Aufbau des jeweiligen Adapters 13 deutlich entnehmbar. Jeder Adapter 13 weist ein Halteteil 23 auf, das Flansche 24 besitzt, die mit Durchgangslöchern 25 versehen ist. An einer den Flanschen 24 gegenüber liegenden Seite 25' des Halteteils 23 ist ein Gewindebolzen 26 befestigt. Mittels Gewindeschrauben 27, die die Durchgangslöcher 25 der Flansche 24 durchgreifen und die in Gewindebohrungen 41 einer Nietmutter 42 oder des Einzelstabs 6 eingeschraubt sind, sind die Adapter 13 an dem Galeriestab 3 beziehungsweise dem Einzelstab 6 befestigt. Bei der Montage des Galeriestabs 3 am Dach 4 des Kraftfahrzeugs 2 werden die am Galeriestab 3 befestigten Halteteile 23 in einen Dachkanal des Kraftfahrzeugs eingesetzt. Dabei greifen die Gewindebolzen 26 in Befestigungslöcher der Karosserie des Kraftfahrzeugs 2 ein. Durch Aufschrauben einer Mutter, insbesondere Sicherungsmutter, wird der Galeriestab 3 am Dach 4 des Kraftfahrzeugs 2 sicher gehalten.

Gemäß Figur 3 sind die beiden Einzelstäbe 6 und 7 als Hohlprofile 28, 29 ausgebildet. Bevorzugt handelt es sich um extrudierte Hohlprofile, also extrudierte Einzelstäbe 6 und 7. Die extrudierten Einzelstäbe 6 und 7 werden nach dem Extrudierschritt gebogen und mechanisch bearbeitet. Im vorliegenden Ausführungsbeispiel bestehen beide Hohlprofile 28 und 29 aus einer Aluminiumlegierung. Um einen besonderen optischen Effekt zu schaffen, weisen die beiden Einzelstäbe 6 und 7 unterschiedliche Farben auf. Sie sind beispielsweise derart unterschiedlich eloxiert, dass diese verschiedenen Farben auftreten.

Die Figur 3 zeigt einen Querschnitt durch den Galeriestab 3 sowie die optional verwendete Unterlage 5 im Bereich einer Verbindungsstelle 20. Es ist erkennbar, dass die Breite des Einzelstabs 7 größer ist als die Breite des Einzelstabs 6 im Bereich der Oberseite 30 von letzterem. Für eine Querführung der beiden Einzelstäbe 6 und 7 relativ zueinander ist an der Unterseite 18 des Einzelstabs 7 und an der Oberseite 30 des Einzelstabs 6 jeweils eine Profilierung 31 beziehungsweise 32 vorgesehen. Die Profilierung 31 weist einen Vorsprung 33 sowie zwei beidseitig des Vorsprungs 33 liegende Vertiefungen 34 auf. Die Profilierung 32 weist zwei Vorsprünge 35 sowie eine zwischen den beiden Vorsprüngen 35 liegende Vertiefung 36 auf. Die Anordnung ist nun derart getroffen, dass beim Aufsetzen der Unterseite 18 des Einzelstabs 7 auf die Oberseite 30 des Einzelstabs 6 der Vorsprung 33 in die Vertiefung 36 eintaucht und die Vorsprünge 35 in die Vertiefungen 34. Der Vorsprung 33 setzt sich als weiterer Vorsprung 37 im Innern 38 des Einzelstabs 7 fort, wodurch sehr viel "Fleisch" für die Gewindebohrung 39 an der Unterseite 18 des Einzelstabs 7 zur Verfügung steht. Im Bereich der Vertiefung 36 des Einzelstabs 6 liegt die Durchgangsöffnung 40 des Einzelstabs 6. Zum miteinander Verbinden der beiden Einzelstäbe 6 und 7 ist die Gewindeschraube 22 von der Unterseite 11 des Einzelstabs 6 her, die Durchgangsöffnung 40 durchgreifend, in die Gewindebohrung 39 eingeschraubt.

Aus der Figur 3 ist ersichtlich, dass beidseitig jeder Vertiefung 34 zwei Vorsprünge liegen, nämlich zum einen der bereits erwähnte Vorsprung 33 und zum anderen ein weiterer Vorsprung 47. Die beiden Vorsprünge 47 übergreifen Seitenflächen 48 des Einzelstabs 6 und bilden hierdurch zusätzliche Querführungen.

Insbesondere ist vorgesehen, dass die Vorsprünge 33, 35 und 47 als sich über die Länge des jeweiligen Einzelstabs 6, 7 erstreckende Rippen 49 ausgebildet sind. Auch der Vorsprung 37 kann als eine derartige Rippe 49 ausgebildet sein. Ferner ist vorgesehen, dass die Vertiefungen 34 und 36 jeweils als sich über die Länge des jeweiligen Einzelstabs 6, 7 erstreckende Nut 50 ausgebildet sind. Derartige Rippen 49 und Nuten 50 sind auf sehr einfache Weise beim Extrudierschritt von extrudierte Einzelstäben 6 und 7 mit herstellbar.

Im Bereich der Unterseite 11 des Einzelstabs 6 weist dieser auf einander gegenüberliegenden Seiten (Figur 3) Stufen 41 auf, in die entsprechende Gegenstufen 42 der elastischen Unterlage 5 eingeklipst sind.

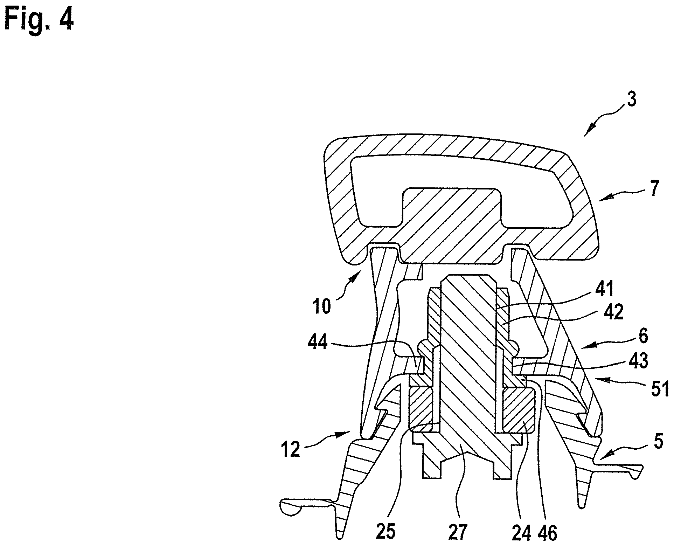

Die Figur 4 zeigt einen der Figur 3 entsprechenden Querschnitt durch den Galeriestab 3, nunmehr jedoch im Bereich einer Schraubbefestigung 51, mit der ein Befestigungselement 12 an dem Einzelstab 6 befestigt ist. Die Figur 4 zeigt, dass die jeweilige Gewindeschraube 27 nicht in eine unmittelbar im Einzelstab 6 ausgebildete Gewindebohrung eingeschraubt ist, sondern eine Gewindebohrung 41, die an der Nietmutter 42 ausgebildet ist, wobei die Nietmutter 42 in ein Durchgangsloch 43 einer inneren Wand 44 des Einzelstabs 6 durch Vernietung befestigt ist. Der Kopf 45 der Gewindeschraube 27 drängt den entsprechenden Flansch 24 des Halteteils 23 gegen einen Flansch 46 der Nietmutter 42, wodurch der Adapter 13 beziehungsweise das Befestigungselement 12 sicher an dem Einzelstab 6 gehalten ist.

## Patentansprüche

1. Dachreling für ein Kraftfahrzeug, mit mindestens einem sich entlang des Dachs des Kraftfahrzeugs erstreckenden längsgeteilten Galeriestab, der sich aus mehreren, miteinander fest verbundenen Einzelstäben (6,7) zusammensetzt, **dadurch gekennzeichnet, dass** die Einzelstäbe (6,7) jeweils Ober- und Unterseiten aufweisen, wobei auf die Oberseite (30) von mindestens einem der Einzelstäbe (6) die Unterseite (18) eines angrenzenden Einzelstabs (7) aufgesetzt angeordnet ist.

2. Dachreling nach Anspruch 1, **dadurch gekennzeichnet, dass** die Oberseite (30) und/oder die Unterseite (18) von zumindest einigen der aneinandergrenzenden Einzelstäbe (6,7) ineinandergreifende Profilierungen (31,32) aufweisen.

3. Dachreling nach einem der vorhergehenden Ansprüche, **dadurch gekennzeichnet, dass** die eine der Profilierungen (31,32) mindestens einen Vorsprung (33,35,47), insbesondere mindestens eine sich über die Länge des Einzelstabs (6,7) erstreckende, den Vorsprung (33,35,47) bildende Rippe (49), aufweist und dass die andere der Profilierungen (32,31) mindestens eine den Vorsprung (33,35,47) aufnehmende Vertiefung (34,36), insbesondere eine sich über die Länge des Einzelstabs (6,7) erstreckende, die Vertiefung (34,36) bildende Nut (50), aufweist.

4. Dachreling nach einem der vorhergehenden Ansprüche, **dadurch gekennzeichnet, dass** der längsgeteilte Galeriestab (3) ein zweigeteilter Galeriestab (3) mit einem ein Oberteil (9) bildenden Einzelstab (7) und einem ein Unterteil (8) bildenden Einzelstab (6) ist.

5. Dachreling nach einem der vorhergehenden Ansprüche, **dadurch gekennzeichnet, dass** die Einzelstäbe (6,7) mittels mehrerer, über ihre Länge verteilt angeordneter Verbindungsstellen (20) miteinander verbunden sind.

6. Dachreling nach einem der vorhergehenden Ansprüche, **dadurch gekennzeichnet, dass** die Einzelstäbe (6,7) - im Querschnitt gesehen - unterschiedlich große Breiten aufweisen.

7. Dachreling nach einem der vorhergehenden Ansprüche, **dadurch gekennzeichnet, dass** - im Querschnitt gesehen - die Breite des Oberteils (9) größer ist als die an seiner Oberseite (30) vorliegende Breite des Unterteils (8).

8. Dachreling nach einem der vorhergehenden Ansprüche, **dadurch gekennzeichnet, dass** an der Unterseite (18) von mindestens einem der Einzelstäbe (7) mindestens eine Tasche (19) ausgebildet ist, in die ein Endbereich eines angrenzenden Einzelstabs (6) eingreift.

9. Dachreling nach einem der vorhergehenden Ansprüche, **dadurch gekennzeichnet, dass** an der Unterseite (11) des zu unterst liegenden Einzelstabs (6) mindestens ein Adapter (13) zur Befestigung am Dach (4), insbesondere an der Karosserie, des Kraftfahrzeugs (2) angeordnet, insbesondere befestigt, vorzugsweise schraubbefestigt, nietbefestigt und/oder nutsteinbefestigt ist.

10. Dachreling nach einem der vorhergehenden Ansprüche, **dadurch gekennzeichnet, dass** die Einzelstäbe (6,7) insbesondere an ihren Sichtflächen unterschiedliche Farben, unterschiedliche Oberflächenstrukturen und/oder unterschiedliche Beschichtungen aufweisen.

11. Dachreling nach einem der vorhergehenden Ansprüche, **dadurch gekennzeichnet, dass** das Unterteil (8) das Oberteil (9) trägt.

12. Dachreling nach einem der vorhergehenden Ansprüche, **dadurch gekennzeichnet, dass** die Einzelstäbe (6,7) jeweils einstückig ausgebildet sind.

13. Kraftfahrzeug, versehen mit einer Dachreling nach einem oder mehreren der vorhergehenden Ansprüche.

14. Verfahren zur Herstellung einer Dachreling für ein Kraftfahrzeug, insbesondere nach einem oder mehreren der vorhergehenden Ansprüche, mit mindestens einem sich entlang des Dachs (4) des Kraftfahrzeugs (2) erstreckenden längsgeteilten Galeriestab (3), der aus mehreren Einzelstäben (6,7) zusammengesetzt wird, **dadurch gekennzeichnet, dass** die Einzelstäbe (6,7) jeweils Ober- und Unterseiten aufweisen, wobei auf die Oberseite (30) von mindestens einem der Einzelstäbe (6) die Unterseite (18) eines angrenzenden Einzelstabs (7) aufgesetzt angeordnet ist.

## Claims

1. A roof rack for a motor vehicle, having at least one longitudinally divided roof rack bar extending along the roof of the motor vehicle, being composed of a plurality of individual bars (6, 7) which are fixed to each other, **characterized in that** the individual bars (6, 7) each have upper and lower sides, wherein the upper side (30) of at least one of the individual bars (6) is placed on the lower side (18) of an adjacent individual bar (7).

2. The roof rack according to claim 1, **characterized in that** the upper side (30) and/or the lower side (18) of at least some of the adjacent individual bars (6, 7) have interlocking profiles (31, 32).

3. The roof rack according to any one of the preceding claims, **characterized in that** one of the profiles (31, 32) has at least one projection (33, 35, 47), in particular at least one rib (49) which extends over the length of the individual bar (6, 7) and forms the projection (33, 35, 47), and **in that** the other of the profiles (32, 31) has at least one depression (34, 36) which receives the projection (33, 35, 47), in particular a groove (50) which extends over the length of the individual bar (6, 7) and forms the depression (34, 36).

4. The roof rack according to any one of the preceding claims, **characterized in that** the longitudinally divided roof rack bar (3) is a two-piece roof rack bar (3) with an individual bar (7) forming an upper part (9) and an individual bar (6) forming a lower part (8).

5. The roof rack according to any one of the preceding claims, **characterized in that** the individual bars (6, 7) are connected to each other by means of a plurality of connections (20) distributed over their lengths.

6. The roof rack according to one of the preceding claims, **characterized in that** the individual bars (6, 7) - as seen in cross-section - have different widths.

7. The roof rack according to any one of the preceding claims, **characterized in that** - as seen in cross-section - the width of the upper part (9) is greater than the width of the lower part (8) on the upper side (30) thereof.

8. The roof rack according to any one of the preceding claims, **characterized in that** at least one pocket (19) is constructed on the lower side (18) of at least one of the individual bars (7), wherein an end region of an adjacent individual bar (6) engages with the same.

9. The roof rack according to any one of the preceding claims, **characterized in that** at least one adapter (13) for attachment to the roof (4), in particular to the body of the motor vehicle (2), is arranged - in particular, fastened, and preferably bolted, riveted, and/or fastened with a sliding block - on the lower side (11) of the lowermost individual bar (6).

10. The roof rack according to any one of the preceding claims, **characterized in that** the individual bars (6, 7) have different colors, different surface structures, and/or different coatings, particularly on their visible surfaces.

11. The roof rack according to any one of the preceding claims, **characterized in that** the lower part (8) supports the upper part (9).

12. The roof rack according to any one of the preceding claims, **characterized in that** the individual bars (6, 7) are each designed as a single piece.

13. A motor vehicle equipped with a roof rack according to one or more of the preceding claims.

14. A method for the production of a roof rack for a motor vehicle, in particular according to one or more of the preceding claims, having at least one longitudinally divided roof rack bar (3) extending along the roof (4) of the motor vehicle (2), being composed of a plurality of individual bars (6, 7), **characterized in that** the individual bars (6, 7) each have upper and lower sides, wherein the upper side (30) of at least one of the individual bars (6) is placed on the lower side (18) of an adjacent individual bar (7).

## Revendications

1. Galerie de toit pour un véhicule à moteur, dotée d'au moins une barre de galerie partagée longitudinalement et s'étendant le long du toit du véhicule à moteur, laquelle est constituée de plusieurs barres individuelles (6, 7) reliées fixement l'une à l'autre, **caractérisée en ce que** les barres individuelles (6, 7) comportent respectivement des faces supérieures et inférieures, dans laquelle sur la face supérieure (30) d'au moins une des barres individuelles (6) est superposée la face inférieure (18) d'une barre individuelle (7) adjacente.

2. Galerie de toit selon la revendication 1, **caractérisée en ce que** la face supérieure (30) et/ou la face inférieure (18) d'au moins certaines des barres individuelles adjacentes l'une à l'autre (6, 7) comportent des profilages (31, 32) s'engageant l'un dans l'autre.

3. Galerie de toit selon l'une des revendications précédentes, **caractérisée en ce que** l'un des profilages (31, 32) comporte au moins une saillie (33, 35, 47), en particulier au moins une nervure (49) s'étendant sur la longueur de la barre individuelle (6, 7) et formant la saillie (33, 35, 47) et **en ce que** l'autre profilage (32, 31) comporte au moins une dépression (34, 36) accueillant la saillie (33, 35, 47), en particulier au moins une rainure (50) s'étendant sur la longueur de la barre individuelle (6, 7) et formant la dépression (34, 36).

4. Galerie de toit selon l'une des revendications précédentes, **caractérisée en ce que** la barre de galerie partagée longitudinalement (3) est une barre de galerie (3) en deux parties, dotée d'une barre individuelle (7) formant une partie supérieure (9) et d'une barre individuelle (6) formant une partie inférieure (8).

5. Galerie de toit selon l'une des revendications précédentes, **caractérisée en ce que** les barres individuelles (6, 7) sont reliées l'une à l'autre au moyen de plusieurs points de connexion (20) répartis sur leur longueur.

6. Galerie de toit selon l'une des revendications précédentes, **caractérisée en ce que** les barres individuelles (6, 7) possèdent, vues en coupe transversale, des largeurs différentes.

7. Galerie de toit selon l'une des revendications précédentes, **caractérisée en ce que** la largeur de la partie supérieure (9), vue en coupe transversale, est supérieure à la largeur de la partie inférieure (8) sur sa face supérieure (30).

8. Galerie de toit selon l'une des revendications précédentes, **caractérisée en ce qu'**au moins une poche (19) est réalisée sur la face inférieure (18) d'au moins une des barres individuelles (7), une zone d'extrémité d'une barre individuelle adjacente (6) entrant en prise dans celle-ci.

9. Galerie de toit selon l'une des revendications précédentes, **caractérisée en ce qu'**au moins un adaptateur (13) est agencé sur la face inférieure (11) de la barre individuelle (6) la plus basse pour la fixation au toit (4), en particulier à la carrosserie, du véhicule à moteur (2), en particulier fixé, de préférence fixé par vis, par rivets et/ou par clavette rainurée.

10. Galerie de toit selon l'une des revendications précédentes, **caractérisée en ce que** les barres individuelles (6, 7) comportent en particulier sur leurs surfaces visibles des couleurs différentes, des structures de surface différentes et/ou des revêtements différents.

11. Galerie de toit selon l'une des revendications précédentes, **caractérisée en ce que** la partie inférieure (8) porte la partie supérieure (9).

12. Galerie de toit selon l'une des revendications précédentes, **caractérisée en ce que** les barres individuelles (6, 7) sont réalisées respectivement d'une seule pièce.

13. Véhicule à moteur, prévu avec une galerie de toit selon une ou plusieurs des revendications précédentes.

14. Procédé de fabrication d'une galerie de toit pour un véhicule à moteur, en particulier selon une ou plusieurs des revendications précédentes, dotée d'au moins une barre de galerie partagée longitudinalement (3) et s'étendant le long du toit (4) du véhicule à moteur (2), laquelle est constituée de plusieurs barres individuelles (6, 7), **caractérisée en ce que** les barres individuelles (6, 7) comportent respectivement des faces supérieures et inférieures, dans laquelle sur la face supérieure (30) d'au moins une des barres individuelles (6) est superposée la face inférieure (18) d'une barre individuelle (7) adjacente.
